(19) Europäisches Patentamt
European Patent Office
Office européen des brevets

(11) **EP 4 379 859 A1**

(12) **EUROPEAN PATENT APPLICATION**

(43) Date of publication:
**05.06.2024 Bulletin 2024/23**

(21) Application number: **23196121.0**

(22) Date of filing: **08.09.2023**

(51) International Patent Classification (IPC):
$H01M\ 4/36$ (2006.01)    $H01M\ 4/38$ (2006.01)
$H01M\ 4/587$ (2010.01)    $H01M\ 4/62$ (2006.01)
$H01M\ 10/0525$ (2010.01)    $H01M\ 4/02$ (2006.01)
$H01M\ 4/133$ (2010.01)    $H01M\ 4/136$ (2010.01)
$H01M\ 4/1397$ (2010.01)    $H01M\ 4/58$ (2010.01)
$H01M\ 4/583$ (2010.01)

(52) Cooperative Patent Classification (CPC):
**H01M 4/13; H01M 4/38; H01M 4/625;**
**H01M 10/052; H01M 10/0567;** H01M 2004/021;
H01M 2004/028; H01M 2300/0025

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 25.11.2022  KR 20220159965
23.12.2022  KR 20220183771
23.12.2022  KR 20220183586
27.12.2022  KR 20220185613
16.05.2023  KR 20230063394
31.05.2023  KR 20230070299
07.06.2023  KR 20230073163
13.06.2023  KR 20230075765

(71) Applicant: **LG Energy Solution, Ltd.**
**Seoul 07335 (KR)**

(72) Inventors:
• **KANG, Da-Young**
**34122 Daejeon (KR)**
• **KIM, Min-Su**
**34122 Daejeon (KR)**
• **KIM, Bong-Soo**
**34122 Daejeon (KR)**
• **YANG, Seung-Bo**
**34122 Daejeon (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR CONTROLLING PARTICLE SIZE OF POROUS CARBON MATERIAL**

(57)    The present disclosure relates to a method for controlling the particle size of a porous carbon material, which includes a step of centrifugally grinding a porous carbon material and filtering the same through a sieve having a mesh size which is 2.8-4 times of the desired $D_{50}$ particle size of the porous carbon material.

FIG. 6

EP 4 379 859 A1

**Description**

The present disclosure relates to a method for controlling the particle size of a porous carbon material. The present disclosure further relates to porous carbon material obtainable by said method. The present disclosure further relates to a sulfur-carbon composite comprising said porous carbon material. The present disclosure further relates to a lithium sulfur-battery comprising said sulfur-carbon composite in a positive electrode thereof.

BACKGROUND ART

Recently, interest in energy storage technology is increasing. Efforts in research and development of electrochemical devices are being embodied gradually as the field of application expands to mobile phones, camcorders, notebook PCs and even electric vehicles.

Electrochemical devices are the field that has received the most attention in this aspect. Among them, the development of secondary batteries that can be charged and discharged has become a focus of attention. Recently, research and development on the design of new electrodes and batteries are being conducted in order to improve capacity density and energy efficiency.

Among the currently used secondary batteries, the lithium secondary battery developed in the early 1990s is advantageous in that operating voltage is high and energy density is remarkably high as compared to the conventional batteries using aqueous solution electrolytes, such as Ni-MH, Ni-Cd and sulfate-lead batteries.

In particular, the lithium-sulfur (Li-S) battery is a secondary battery which uses a sulfur-based material having an S-S (sulfur-sulfur) bond as a positive electrode active material and uses lithium metal as a negative electrode active material. Sulfur, which is the main material of the positive electrode active material, has the advantageous that it is very abundant, is nontoxic and has a small weight per atom. In addition, since the lithium-sulfur battery has a theoretical discharge capacity of 1675 mAh/g-sulfur and a very high theoretical energy density of 2,600 Wh/kg as compared to other battery systems currently being studied (Ni-MH battery: 450 Wh/kg, Li-FeS battery: 480 Wh/kg, Li-MnO$_2$ battery: 1,000 Wh/kg, Na-S battery: 800 Wh/kg), it is the most promising battery among the batteries that have been developed so far.

During the discharge of the lithium-sulfur battery, oxidation of lithium occurs at a negative electrode and reduction of sulfur occurs at a positive electrode. Sulfur has a cyclic S$_8$ structure before the discharge. During the reduction reaction (discharge), the oxidation number of S is decreased as the S-S bond is broken. During the oxidation reaction (charge), the oxidation number of S is increased as the S-S bond is formed again. Through this oxidation-reduction reaction, electrical energy is generated and stored. During this reaction, sulfur is converted from the cyclic S$_8$ to lithium polysulfide (Li$_2$S$_x$, $1 \leq x \leq 8$) having a linear structure through reduction. If the lithium polysulfide is reduced completely, lithium sulfide (Li$_2$S) is formed finally. The lithium-sulfur battery exhibits a discharge behavior characterized by a stepwise discharge voltage unlike the lithium-ion battery due to the reduction to lithium polysulfide.

In order to confer energy density and lifetime characteristics of commercially viable levels to the lithium-sulfur battery, various technologies for improving the electrochemical reactivity and stability of the positive electrode active material, i.e. a sulfur-carbon composite, have been proposed.

In order to improve the performance of the lithium-sulfur battery, the reactivity of the positive electrode active material should be maximized. Since sulfur used as the positive electrode active material of the lithium-sulfur battery has no conductivity, a carbon material is used as a support to maximize the reactivity. Usually, a sulfur-carbon composite wherein the carbon material is mixed with sulfur is used.

However, when a carbon material having a large specific surface area and a high porosity is used as a support for sulfur, the particle size of the carbon material needs to be controlled to have a narrow particle size distribution because the particle size of the carbon material greatly affects the discharge capacity and energy density of the lithium-sulfur battery.

Conventionally, the carbon material has been pulverized for control of the particle size of the carbon material. However, there is a problem that the particle size distribution is broad because large-sized particles and small-sized particles exist together.

Accordingly, there is a need to develop a method for controlling the particle size of a porous carbon material to achieve a narrow particle size distribution.

DISCLOSURE

Technical Problem

The present disclosure aims to provide a method for controlling the particle size of a porous carbon material, which enables the preparation of particles with a small particle size distribution and a desired D$_{50}$ particle size with high productivity through a continuous process.

Technical Solution

The above problem is solved in accordance with the subject matter of the independent claims. Further embodiments result from the sub-claims and the following written description.

In an aspect, the present disclosure provides a method for preparing a porous carbon material with a controlled particle size according to the following exemplary embodiments.

A method for preparing a porous carbon material with a controlled particle size according to a first exemplary embodiment includes:

(1) a step of grinding a porous carbon material using a centrifugal grinder; and
(2) a step of filtering the ground porous carbon material obtained in step (1) through a sieve to obtain the porous carbon material with a controlled particle size,

wherein the mesh size of the sieve is 2.8-4 times of the target $D_{50}$ particle size of the porous carbon material with a controlled particle size determined by laser diffraction analysis.

According to a second exemplary embodiment, in the first exemplary embodiment, the porous carbon material may include one or more selected from a group consisting of carbon nanotube, carbon black, carbon nanofiber, graphite and activated carbon.

According to a third exemplary embodiment, in the first or second exemplary embodiment, grinding of the porous carbon material in step (1) is performed using the centrifugal grinder operated with an angular velocity from 30 to 125 rad/s..

According to a fourth exemplary embodiment, in any of the first to third exemplary embodiments, the centrifugal grinder has a plurality of teeth, and particularly 2 to 20 teeth.

According to a fifth exemplary embodiment, in the fourth exemplary embodiment, each of the plurality of teeth has a shape of a triangular prism, particularly an equilateral triangular prism, and is arranged so as to point inwardly.

According to a sixth exemplary embodiment, in the fourth or the fifth exemplary embodiment, the teeth are arranged so that, in a top view along a rotation axis of the centrifugal grinder, perpendicular bisectors of the triangular prisms meet in a center of the centrifugal grinder.

According to a seventh exemplary embodiment, in any of the fourth to the sixth exemplary embodiment, the sieve has an annular cylindrical shape, wherein the sieve is arranged such as to surround the plurality of teeth.

According to an eighth exemplary embodiment, in any of the fourth to the seventh exemplary embodiment, in the top view, a smallest distance between one of the plurality of teeth and the sieve in a radial direction of the centrifugal grinder is from 0.5 to 2 mm.

According to a ninth exemplary embodiment, in any of the fourth to the eighth exemplary embodiment, the teeth are made of stainless steel, titanium and/or stainless steel with a protective coating.

According to a tenth exemplary embodiment, in any of the fourth to the ninth exemplary embodiment, the sieve comprises a mesh having trapezoid shaped holes and/or circular holes.

According to an eleventh exemplary embodiment, in any of the first to tenth exemplary embodiments, the porous carbon material with a controlled particle size may have a ratio of the $D_{90}$ particle size to the $D_{10}$ particle size (broadness factor, BF) of 7 or less.

According to a twelfth exemplary embodiment, in any of the first to eleventh exemplary embodiments, the $D_{10}$ to $D_{50}$ particle size standard deviation of the porous carbon material with a controlled particle size may be 1.5 $\mu$m or less.

According to a thirteenth exemplary embodiment, in any of the first to twelfth exemplary embodiments, the $D_{50}$ particle size of the porous carbon material with a controlled particle size may be 100 $\mu$m or smaller.

According to a fourteenth exemplary embodiment, in any of the first to thirteenth exemplary embodiments, the tap density of the porous carbon material before step (1) may be the same as or higher than the tap density of the porous carbon material with a controlled particle size after filtering through the sieve in the step (2).

According to a fifteenth exemplary embodiment, in any of the first to fourteenth exemplary embodiments, in the steps (1) and (2) may be performed at the same time.

According to a sixteenth exemplary embodiment, in any of the first to fifteenth exemplary embodiments, the porous carbon material has a grain shape which is angular to sub-angular.

According to a seventeenth exemplary embodiment, in any of the first to sixteenth exemplary embodiments, the grain shape a prismoidal sphericity.

In another aspect of the present disclosure, there are provided a sulfur-carbon composite and a lithium-sulfur battery according to the following exemplary embodiments.

According to an eighteenth exemplary embodiment, there is provided a sulfur-carbon composite including: a porous carbon material prepared according to any of the first to seventeenth exemplary embodiments; and a sulfur-based material at least partially supported on the surface of the porous carbon material.

According to a nineteenth exemplary embodiment, in the eighteenth exemplary embodiment, the sulfur-carbon composite has a botryoidal texture.

According to a twentieth exemplary embodiment, there is provided a lithium-sulfur battery including: a positive electrode including the sulfur-carbon composite according to the nineteenth exemplary embodiment; a negative electrode; a separator disposed between the positive electrode and the negative electrode; and an electrolyte.

Advantageous Effects

The method for controlling the particle size of a porous carbon material according to the present disclosure provides advantageous effects, especially that a porous carbon material with a desired particle size and a narrow particle size distribution is prepared through a continuous process economically, especially in short processing time with high productivity.

In addition, when sulfur (Ss) or another sulfur-based material is supported on the porous carbon material with a controlled particle size prepared according to the present disclosure and the sulfur composite obtained this way is used as an active material of a lithium-sulfur battery, especially as an active material of a positive electrode of the lithium-sulfur battery, the electrochemical performance of the lithium-sulfur battery is improved, especially since the degree of utilization of sulfur is increased, although the effect of the present disclosure is not limited thereto.

DESCRIPTION OF DRAWINGS

FIG. 1 schematically illustrates the centrifugal grinding of a porous carbon material.

FIG. 2 schematically illustrates the pulverization of a porous carbon material with a ball mill.

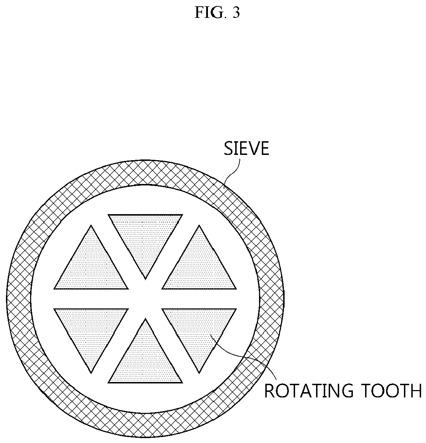

FIG. 3 shematically shows the cross section of a centrifugal grinder.

FIG. 4 shows the particle size distribution of porous carbon materials with a controlled particle size of Examples 1-5 and that of Comparative Example 3.

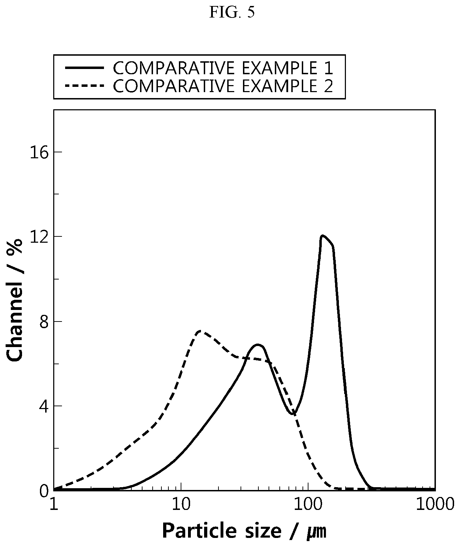

FIG. 5 shows the particle size distribution of a porous carbon material of Comparative Example 1 and that of a porous carbon material with of Comparative Example 2.

FIG.6 shows an SEM image of a carbon material according to Comparative Example 2 (left) having a relatively flat surface and of Example 1 (right) having a relatively rough surface.

BEST MODE

Hereinafter, the present disclosure is described in more detail.

The terms or words used in the present specification and claims should not be construed as being limited to their ordinary or dictionary meanings and should be interpreted as meanings and concepts consistent with the technical idea of the present disclosure based on the principle that an inventor may properly define the concept of terms to best explain his/her invention.

Unless otherwise restricted, a detailed description defining or specifying the elements may be applied to all inventions and is not limited to descriptions of particular inventions. That is, the present disclosure also refers to combinations of the embodiments even if they are disclosed separately.

Additionally, unless explicitly stated otherwise, a singular form includes a plural form throughout the detailed description and the appended claims.

Additionally, unless explicitly stated otherwise, "or" includes "and" throughout the detailed description and the appended claims. Accordingly, "comprising A or B" refers to comprising either A or B or both. Additionally, unless explicitly stated otherwise, "comprising" or "including" or the like includes "consisting of" unless explicitly stated otherwise.

The term "composite" used in the present specification refers to a material in which two or more materials are combined to form physically or chemically different phases and which exhibits more effective functions.

In the present disclosure, the "particle size $D_{10}$" refers to the particle size on the basis of 10% in the volume-cumulative particle size distribution of the particles to be measured, the "particle size $D_{50}$" refers to the particle size on the basis of 50% in the volume-cumulative particle size distribution of the particles to be measured, and the "particle size $D_{90}$" refers to the particle size on the basis of 90% in the volume-cumulative particle size distribution of the particles to be measured. That is, for example, the average particle size (D50) may be the median diameter or the medium value of the particle size distribution, that is, the value of the particle diameter at 50% in the cumulative distribution. The particle size means the particle diameter. The particle diameter may refer to the longest distance of opposed surfaces of the particle.

The particle sizes $D_{10}$, $D_{50}$ and $D_{90}$ may be measured by the laser diffraction method. For example, after dispersing the particles to be measured in a dispersion medium and irradiating ultrasonic waves of about 28 kHz with an output of 60 W, a volume-cumulative particle size distribution may be obtained using a commercially available laser diffraction particle size analyzer (e.g., Microtrac MT 3000) and the particle size corresponding to 10%, 50% and 90% in the volume-cumulative distribution may be determined.

The term "porosity" used in the present specification refers to the ratio of the volume of pores to the total volume of a structure, in vol% unit, and may be used interchangeably with the term pore ratio. The porosity may be measured according to ISO 15901:2019 in the version of the priority date of the present filing.

The present disclosure relates to a method for controlling the particle size of a porous carbon material, which includes:

(1) a step of grinding (which can also be considered as a milling) a porous carbon material using a centrifugal grinder; and

(2) a step of filtering the ground porous carbon material obtained in step (1) through a sieve to obtain the porous carbon material with a controlled particle size,

wherein the mesh size of the sieve is 2.8-4 times of the target $D_{50}$ particle size determined by laser diffraction analysis of the porous carbon material with a controlled particle size.

The step (1) is a step in which the porous carbon material is centrifugally ground, that is, ground using a centrifugal grinder. The term "grinding" as used in the present specification refers to a process of comminuting the ground material. In this context, grinding can be synonymous to milling, pulverizing, mincing, crushing etc. Especially, grinding can be milling.

The porous carbon material includes irregular pores therein (closed pores) and/or at the surface thereof (open pores). The average diameter of the pores may be 1-200 nm and the porosity may be 10-90 vol% of the total volume of the porous carbon material. The average diameter of the pores can be measured by BET measurement method using gas adsorption or a mercury porosimetry method.

The shape of the porous carbon material is not limited and may be spherical, rod-shaped, needle-shaped, plate-shaped, tube-shaped, bulk-type or a mixture of two or more thereof.

The porous carbon material is not specially limited as long as it has a porous structure and a large specific surface area. For example, it may include one or more selected from a group consisting of carbon nanotube, carbon black, carbon nanofiber, graphite and activated carbon, specifically carbon nanotube. In this regard, the porous carbon material is the material which is ground in the step (1) of the method for preparing a porous carbon material with a controlled particle size according to the invention. However, the type of the porous carbon material (carbon nanotube, carbon black etc.) does not change during the process but only properties, such as particle size, uniformity in particle size distribution etc. The "specific surface area" is measured by the BET method, and can be specifically calculated from the nitrogen gas adsorption amount under liquid nitrogen temperature (77K) using BELSORP-mini II of BEL Japan.

The carbon nanotube may include one or more selected from a group consisting of single-walled carbon nanotube and multi-walled carbon nanotube, although not being limited thereto. The grinding and/or sieving as done in the method according to the present disclosure does not result in a chemical modification, especially does not convert the multi-walled carbon nanotubes into single-walled carbon nanotubes or the like.

The carbon black may include one or more selected from a group consisting of graphite, graphene, denka black, acetylene black, ketjen black, channel black, furnace black, lamp black and thermal black, although not being limited thereto.

The carbon nanofiber may include one or more selected from a group consisting of graphite nanofiber, carbon nanofiber and activated carbon fiber, although not being limited thereto.

The graphite may include one or more selected from a group consisting of natural graphite, artificial graphite and expandable graphite, although not being limited thereto.

Conventionally, the porous carbon material has been pulverized using a ball mill, a blade, etc. in order to control the particle size of the porous carbon material. However, the conventional pulverization method has the problem that a porous carbon material with a large particle size and a porous carbon material with a small particle size exist together as the porous carbon material contacts with the ball or the blade randomly, resulting in a broad particle size distribution.

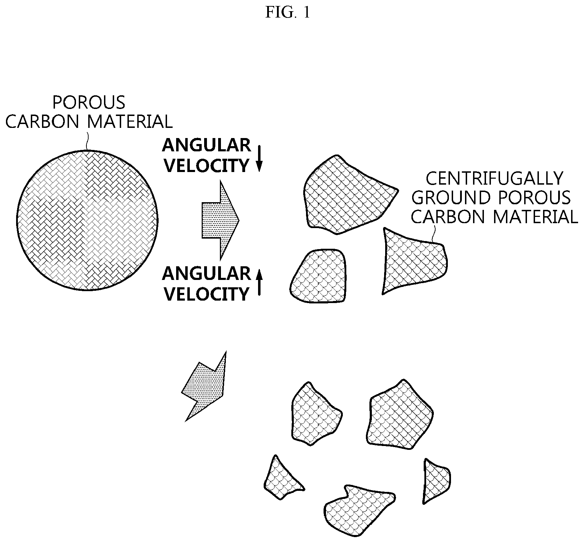

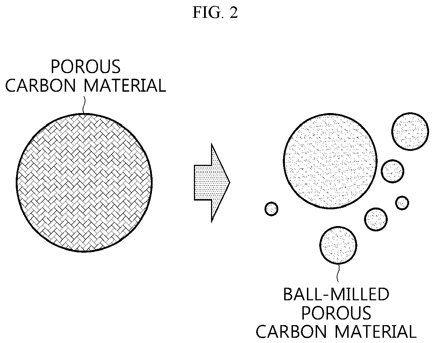

In addition, referring to FIGS. 1 and 2, the porous carbon material in which the particle size is controlled by sieving the pulverized particles after centrifugal pulverization as in the present invention is filtered by the sieve when the particle size is controlled, resulting in additional abrasion on the surface of the particles and preventing further pulverizing of the particle size. On the other hand, if pulverized by a ball mill or the like is not sieved through a sieve, the particles introduced into the ball mill or the like are continuously pulverized or the surface is abraded, resulting in a high amount of fine powder and a high tap density.

Different from these conventional methods used in the prior art, in the present disclosure, after the porous carbon material has been centrifugally ground, that is, ground using a centrifugal grinder, the step (2) of filtering the centrifugally ground porous carbon material through a sieve may be performed. Therefore, for the centrifugally ground porous carbon material to pass through the sieve, almost all the porous carbon material introduced into the centrifugal grinder should be pulverized by contacting with the teeth of the centrifugal grinder. If the particle size becomes small enough to pass through the sieve, the centrifugally ground porous carbon material passes through the sieve without further grinding. As a result, the porous carbon material contacts with the blade of the centrifugal grinder with the minimum number of times and, accordingly, the fine powder generation rate may be very low and the particle size distribution may become very narrow. In the present disclosure, the fine powder means that the particle size is 7 $\mu$m or smaller. The particle size of the fine powder may mean the $D_{10}$ particle size.

In addition, since the porous carbon material is centrifugally ground as if tearing, the centrifugally ground porous carbon material may have a non-spherical shape. The porous carbon material may have a grain shape which is angular to sub-angular. The porous carbon material may have a grain shape wherein the grain shape a prismoidal sphericity.

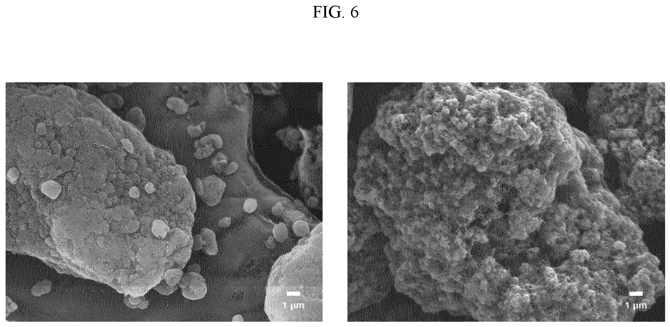

Referring to FIG. 6, it is confirmed that the surface of the porous carbon material pulverized by a jet mill or the like (left side) is relatively flat, whereas the surface of the porous carbon material pulverized by a centrifugal mill (right side) is relatively rough.

The centrifugal grinder used in the method according to the present invention may have a plurality of teeth, for example, 2 to 20 teeth, 4 to 18 teeth, 6 to 16 teeth, 8 to 14 teeth, 10 to 14 teeth, such as 12 teeth. Each of the plurality of teeth may have a shape of a triangular prism, particularly an equilateral triangular prism, and may be arranged so as to point inwardly. The teeth may be arranged so that, in a top view along a rotation axis of the centrifugal grinder, perpendicular bisectors of the triangular prisms meet in a center of the centrifugal grinder. The teeth may be made of stainless steel, titanium and/or stainless steel with a protective coating. An example of such a centrifugal grinder which can be used as the centrifugal grinder in the method according to the present invention is a centrifugal grinder ZM 200 of Retsch GmbH.

The centrifugally grinding may be performed at 6,000-23,000 rpm for the control of the particle size of the porous carbon material. The centrifugally grinding may be performed at 6,000-18,000 rpm for the control of the particle size of the porous carbon material. Especially, the centrifugally grinding may be performed at 6,000-23,000 rpm , preferably at 6,000 to 18,000 rpm for the control of the particle size of the porous carbon material if a centrifugal grinder as described above, such as ZM 200 of Retsch GmbH, is used.

Grinding of the porous carbon material in step (1) may be performed using the centrifugal grinder operated with an angular velocity from 30 to 125 rad/s. Grinding of the porous carbon material in step (1) may be performed using the centrifugal grinder operated with an angular velocity from 30 to 95 rad/s. Grinding of the porous carbon material in step (1) may be performed using the centrifugal grinder operated with an angular velocity from 30 to 125 rad/s, preferably 30 to 95 rad/s, if a centrifugal grinder as described above, such as ZM 200 of Retsch GmbH, is used.

$$Angular\ velocity = \frac{RPM \times circumfence}{60\ s}$$

wherein the circumference is the distance one tooth of the centrifugal binder moves until it returns to the same spot, that is, one complete rotation of the tooth.

The step (2) is a step in which the porous carbon material centrifugally ground in the step (1) is filtered through a sieve.

The sieve may be equipped on the outer rim of the centrifugal grinder. The sieve may have an annular cylindrical shape, wherein the sieve is arranged such as to surround the plurality of teeth. In the top view, a smallest distance between one of the plurality of teeth and the sieve in a radial direction of the centrifugal grinder may be from 0.1 to 5 mm, from 0.5 to 2 mm, or from 0.7 to 1.2, such as about 1 mm. The sieve may comprise a mesh having trapezoid shaped holes and/or circular holes.

In the top view, the distance between two adjacent ones of the plurality of teeth may be 5 to 30 % of the inner diameter of the sieve. In the top view, the teeth may occupy 25 to 75 % of an area formed by the inner wall of the sieve.

As the teeth rotate, the porous carbon material is ground (milled) and particles of the porous carbon material having reached an appropriate size penetrate through the sieve immediately and do not take further damage (comminution). In this way improved article size control and narrow particle size distribution can be achieved.

In the step (2), the porous carbon material centrifugally ground in the step (1) is transferred to and filtered through the sieve. The steps (1) and (2) may be performed by a continuous process, that is, the steps (1) and (2) are performed at the same time. That is to say, in the step (2), the porous carbon material centrifugally ground in the step (1) is not separately collected and added to the sieve. Specifically, the porous carbon material is centrifugally ground and the centrifugally ground porous carbon material is filtered as it passes through the sieve if it has a particle size small enough to pass through the sieve. That is to say, the centrifugal grinding in the step (1) and the filtration through the sieve in the step (2) may be performed at the same time. Performing both step (1) and step (2) at the same time, that is , in a continuous process, can be done by using a centrifugal grinder as characterized above, such as ZM 200 of Retsch, wherein the sieve has an annular cylindrical shape, wherein the sieve is arranged such as to surround the plurality of teeth comprised in the centrifugal grinder. As the steps (1) and (2) are performed at the same time (in a continuous process), processing time may be very short and very superior process efficiency may be achieved.

The particle size of the porous carbon material may be controlled by controlling the mesh size of the sieve used in the step (2). The mesh size of the sieve may be 2.8-4 times of the target $D_{50}$ particle size of the porous carbon material ($2.8 \le$ mesh size/target $D_{50} \le 4$). The target $D_{50}$ particle size is the $D_{50}$ particle size desired by one carrying out the method according to the invention and can be freely chosen within the limits imposed by the used equipment. For example, the target $D_{50}$ particle size may be in the range from 10 $\mu$m to 100 $\mu$m, such as e.g. 20 $\mu$m to 66 $\mu$m. When the mesh size of the sieve is limited as described above, the desired $D_{50}$ particle size of the porous carbon material may be achieved and a porous carbon material with a narrow particle size distribution may be obtained. In general, if the porous carbon material is filtered through the sieve only without performing centrifugal grinding, the $D_{50}$ particle size of the filtered porous carbon material is about 1/2 of the mesh size of the sieve, and it is impossible to achieve a $D_{50}$ particle size smaller than 1/2 of the mesh size of the sieve. That is to say, in order to achieve the desired $D_{50}$ particle size of the porous carbon material, the mesh size of the sieve should be about 2 times or larger than the desired $D_{50}$ particle size of the porous carbon material. If the mesh size is smaller than 2 times, the desired $D_{50}$ particle size of the porous carbon material cannot be achieved. Since the porous carbon material is centrifugally ground in the step (1) and therefore the overall particle size of the porous carbon material is decreased, the minimum mesh size of the sieve may be 2.8 times of the desired $D_{50}$ particle size of the porous carbon material. And, if the mesh size exceeds 4 times, the particle size of the porous carbon material may not be controlled as desired. In addition, the mesh size of the sieve may be 60-700 $\mu$m, specifically 70-500 $\mu$m, more specifically 70-200 $\mu$m.

The porous carbon material with a controlled particle size, that is, the porous carbon material filtered through the sieve in the step (2) may have a ratio of the $D_{90}$ particle size to the $D_{10}$ particle size ($D_{90}/D_{10}$, broadness factor, BF) of 7 or less. For example, the porous carbon material filtered through the sieve may have a ratio of the $D_{90}$ particle size to the $D_{10}$ particle size from 1 to 6, specifically larger than 1 and 6 or smaller ($1 < D_{90}/D_{10} \le 6$), preferably from 2 to 5, more preferably from 3 to 5.5, most preferred from 3.5 to 5.4, such as from 3.78 to 5.36.

This may mean that the finally prepared porous carbon material has a very narrow particle size distribution. If the ratio of the $D_{90}$ particle size to the $D_{10}$ particle size of the porous carbon material filtered through the sieve is smaller than 1, specifically 1 or smaller, the proportion of particles with a small particle size is too large. And, if it exceeds 7, the proportion of particles with a large particle size is too large, which may mean that the particle size distribution is very broad.

In addition, the $D_{10}$ to $D_{50}$ particle size standard deviation of the porous carbon material filtered through the sieve in the step (2) may be 1.5 $\mu$m or smaller. That is to say, according to the method for controlling the particle size of a porous carbon material of the present disclosure, a porous carbon material with a desired $D_{50}$ particle size may be achieved and a very narrow particle size distribution may be achieved.

In the present specification, the $D_{10}$ to $D_{50}$ particle size standard deviation may refer to the each standard deviation of the $D_{10}$, $D_{20}$, $D_{30}$, $D_{40}$ or $D_{50}$ particle size.

In an exemplary embodiment of the present disclosure, the $D_{50}$ particle size of the porous carbon material filtered through the sieve may be 100 $\mu$m or smaller, 90 $\mu$m or smaller, 80 $\mu$m or smaller or 70 $\mu$m or smaller. In an exemplary embodiment of the present disclosure, the $D_{50}$ particle size of the porous carbon material filtered through the sieve may be 10 $\mu$m or smaller, 15 $\mu$m or smaller, 18 $\mu$m or smaller or 20 $\mu$m or larger.

In addition, the tap density ($\rho_1$) of the porous carbon material before performing centrifugal grinding in the step (1) may be the same as or higher than the tap density ($\rho_2$) of the porous carbon material filtered through the sieve in the step (2) ($\rho_1/\rho_2 \ge 1$). That is to say, the tap density of the porous carbon material may not be increased in the steps (1) and (2), which means that the particle size of the porous carbon material is controlled in the present disclosure without applying pressure to the porous carbon material.

The tap density refers to the apparent density of a powder measured by vibrating a container under a predetermined condition when filling the powder. The tap density may be measured according to ASTM B527-06, and may be measured using TAP-2S (LOGAN Corporation). Specifically, after putting the porous carbon material used in the manufacture of the sulfur-carbon composite in the test container and tapping 1,000 times using a tapping device, the volume (Volume, V) ($cm^3$) per mass (Mass, M) (g) of the porous carbon material was measured to determine the tap density.

$$\text{Tap density (TD)} = [M/V]$$

Accordingly, according to the method for controlling the particle size of a porous carbon material of the present disclosure, a porous carbon material with the desired $D_{50}$ particle size and a very narrow particle size distribution can be obtained by controlling the mesh size of the sieve to be 2.8-4 times of the desired $D_{50}$ particle size of the porous carbon material. In addition, since the method involves a continuous process, process efficiency may be superior due to short preparation time and superior productivity may be achieved.

In another aspect, the present disclosure may provide a porous carbon material with a particle size controlled obtainable by the method described above.

In another aspect, the present disclosure provides a sulfur-carbon composite including: a porous carbon material obtained or obtainable by the method described above; and a sulfur-based material at least partially supported on the surface of the porous carbon material. The surface of the porous carbon material is not smooth but rough. Especially, the porous carbon material may have open pores. The surface of the porous carbon material includes the entire surface available, especially comprises the inside of the pores, such as the inside of the open pores, the outer surface of the porous carbon material etc.

In another aspect, the present disclosure may provide a sulfur-carbon composite including: a porous carbon material obtained or obtainable by the method described above; and a sulfur-based material supported inside the pores or on the outer surface of the porous carbon material wholly or at least partially.

In an exemplary embodiment of the present disclosure, the sulfur-based material may be any material capable of providing sulfur (Ss) as an active material of a lithium-sulfur battery, without particular limitation. For example, the sulfur-based material includes one or more of sulfur (Ss) and a sulfur compound, preferably a disulfide, or a sulfur-containing organic compound.

In an exemplary embodiment of the present disclosure, the sulfur-based material may include or consist of one or more selected from a group consisting of: inorganic sulfur (Ss), a disulfide compound including one or more of $Li_2S_n$ ($n \geq 1$),; an organosulfur compound, preferably 2,5-dimercapto-1,3,4-thiadiazole and 1,3,5-trithiocyanuic acid; and a carbon-sulfur polymer ($(C_2S_x)_n$, $2.5 \leq x \leq 50$, $n \geq 2$). In an exemplary embodiment of the present disclosure, the sulfur-based material is inorganic sulfur (Ss).

In an exemplary embodiment of the present disclosure, the sulfur-based material may be included in the sulfur-carbon composite by physical adsorption to the porous carbon material or by chemical bonding such as covalent bond, van deer Waals bond, etc. between sulfur (S) and carbon in the porous carbon material.

In an exemplary embodiment of the present disclosure, the content of the sulfur (S may be specifically 60 wt% or higher, 70 wt% or higher, or 75 wt% or higher based on 100 wt% of the sulfur-carbon composite. For example, the content of the sulfur-based material may be specifically 60-99 wt%, 70-99 wt%, 75-90 wt%, 70-85 wt%, 70-80 wt%, 70-75 wt%, or 75-80 wt% based on 100 wt% of the sulfur-carbon composite.

In the sulfur-carbon composite according to the present disclosure, the sulfur (S) is located inside the pores or on the outer surface of the carbon material, and may be present on less than 100%, specifically 1-95 %, more specifically 60-90% of the entire inside and external surface of the carbon material. When the amount of the sulfur on the surface of the carbon material is within the above-described ranges, maximum effect may be exhibited in terms of electron transfer area and electrolyte wettability. Specifically, within the above-described ranges, the electron transfer area may be increased during charge and discharge since sulfur is thinly and evenly impregnated into the surface of the carbon material. If the amount of the sulfur on the surface of the carbon material exceeds 100%, the electrolyte wettability is decreased because the carbon material is completely covered with sulfur and it may not participate in reaction since electron is not transferred due to reduced contact with the conductive material included in the electrode.

The sulfur-carbon composite may be composited by simply mixing the sulfur-based material and the carbon material or may have a core-shell coating or supporting structure. The core-shell coating structure refers to a structure in which one of the sulfur-based material or the carbon material is coated with the other. For example, the surface of the carbon material may be coated with sulfur, or vice versa. And the supporting structure may be a structure in which the sulfur-based material is filled inside, particularly in the inner pores, of the carbon material. The type of the sulfur-carbon composite is not specially limited as long as the content ratio of the sulfur and the carbon material described above is satisfied.

In an exemplary embodiment of the present disclosure, the sulfur-carbon composite may be used as a positive electrode active material and/or positive electrode additive of a lithium-sulfur battery, although the present disclosure is not limited thereto.

In another aspect, the present disclosure may provide a lithium-sulfur battery including: a positive electrode including the sulfur-carbon composite described above; a negative electrode; a separator disposed between the positive electrode and the negative electrode; and an electrolyte.

The positive electrode, the negative electrode, the separator and the electrolyte are not specially limited as long as they are those used in a lithium-sulfur battery.

For example, the positive electrode may be manufactured by coating a positive electrode material comprising a mixture of the sulfur-carbon composite, and a binder on a positive electrode current collector, and the positive electrode material may further comprise a filler if necessary.

In general, the positive electrode current collector is manufactured with the thickness of 3 $\mu$m to 500 $\mu$m, and is not limited to a particular type and may include any material having high conductivity without causing any chemical change to the corresponding battery, for example, one selected from stainless steel, aluminum, nickel, titanium, and aluminum or stainless steel surface treated with carbon, nickel, titanium or silver, and specifically aluminum. The current collector may have microtexture on the surface to improve the adhesion strength of the positive electrode active material, and may come in various types, for example, films, sheets, foils, nets, porous bodies, foams and non-woven fabrics.

In addition, the positive electrode active material may comprise, for example, layered compounds or compounds with one or more transition metal such as lithium nickel oxide ($LiNiO_2$); lithium manganese oxide such as formula $Li_{1+x}Mn_{2-x}O_4$ (x is 0 to 0.33), $LiMnO_3$, $LiMn_2O_3$, $LiMnO_2$; lithium copper oxide ($Li_2CuO_2$); vanadium oxide such as $LiVsOs$, $LiV_3O_4$, $V_2O_5$, $Cu_2V_2O_7$; Ni site lithium nickel oxide represented by formula $LiNi_{1-x}M_xO_2$ (M = Co, Mn, Al, Cu, Fe, Mg, B or Ga, x = 0.01 to 0.3); lithium manganese composite oxide represented by formula $LiMn_{2-x}M_xO_2$ (M = Co, Ni, Fe, Cr, Zn or Ta, x = 0.01 to 0.1) or $Li_2Mn_3MO_8$ (M = Fe, Co, Ni, Cu or Zn); $LiMn_2O_4$ with partial substitution of alkali earth metal ion for Li; disulfide compounds; $Fe_2(MoO_4)_3$, but is not limited thereto.

The binder included in the positive electrode assists in binding the active material and the conductive material and binding to the current collector, and is usually added in an amount of 0.1 weight% to 30 weight% based on the total weight of the mixture comprising the positive electrode active material. Examples of the binder may comprise polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer, styrene-butadiene rubber, fluorine rubber and various types of copolymers.

In an exemplary embodiment of the present disclosure, the positive electrode, which includes the sulfur-carbon composite described above, may be advantageous in that it exhibits high sulfur loading and, thus, improves electrochemical performance, although the effect of the present disclosure is not limited thereto.

The negative electrode may be manufactured by coating a negative electrode active material on a negative electrode current collector and drying, and the negative electrode active material may further comprise the components included in the positive electrode described above.

In general, the negative electrode current collector is manufactured with the thickness of 3 $\mu$m to 500 $\mu$m. The negative electrode current collector is not limited to a particular type and may comprise any material having conductive properties without causing any chemical change to the corresponding battery, for example, copper, stainless steel, aluminum, nickel, titanium, sintered carbon, copper or stainless steel surface treated with carbon, nickel, titanium or silver, and aluminum-cadmium alloy. Additionally, in the same manner as the positive electrode current collector, the negative electrode current collector may have microtexture on the surface to improve the adhesion strength of the negative electrode active material, and may come in various types, for example, films, sheets, foils, nets, porous bodies, foams and non-woven fabrics.

For example, the negative electrode active material may comprise carbons such as non-graphitizing carbon and graphite-based carbon; metal composite oxides such as $Li_xFe_2O_3$ ($0\leq x\leq 1$), $Li_xWO_2$ ($0\leq x\leq 1$), $Sn_xMe_{1-x}Me'_yO_z$ (Me: Mn, Fe, Pb, Ge; Me': Al, B, P, Si, Groups 1, 2 and 3 elements of the periodic table, halogen; $0<x\leq 1$; $1\leq y\leq 3$; $1\leq z\leq 8$); lithium metals; lithium alloys; silicon-containing alloys; tin-containing alloys; metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$; conductive polymers such as polyacetylene; and Li-Co-Ni-based materials.

The negative electrode may include a binder. The binder included in the negative electrode is usually added in an amount of 0.1 weight% to 30 weight% based on the total weight of the mixture comprising the negative electrode active material. In an exemplary embodiment of the present application, the negative electrode binder may comprise at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also comprise various polymers thereof.

The non-aqueous electrolyte solution containing a lithium salt comprises an electrolyte solution and the lithium salt, and the electrolyte solution comprises a non-aqueous organic solvent, an organic solid electrolyte and an inorganic solid electrolyte.

For example, the non-aqueous organic solvent may comprise aprotic organic solvents such as N-methyl-2-pyrrolidinone, propylene carbonate, ethylene carbonate, butylene carbonate, dimethyl carbonate, diethyl carbonate, gamma butyrolactone, 1,2-dimethoxy ethane, tetrahydrofuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate and ethyl propionate.

For example, the organic solid electrolyte may comprise polyethylene derivatives, polyethylene oxide derivatives, polypropylene oxide derivatives, phosphoric acid ester polymer, polyalginate lysine, polyester sulfide, polyvinyl alcohol, polyvinylidene fluoride, and polymers containing ionic dissociation groups.

For example, the inorganic solid electrolyte may comprise nitrides, halides and sulfates of Li, for example, $Li_3N$, LiI, $Li_5NI_2$, $Li_3N\text{-}LiI\text{-}LiOH$, $LiSiO_4$, $LiSiO_4\text{-}LiI\text{-}LiOH$, $Li_2SiS_3$, $Li_4SiO_4$, $Li_4SiO_4\text{-}LiI\text{-}LiOH$, $Li_3PO_4\text{-}Li_2S\text{-}SiS_2$.

The lithium salt may be a material that is apt to dissolve in the non-aqueous electrolyte, and may comprise, for example, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, chloroborane lithium, lower aliphatic carboxylic acid lithium, lithium tetraphenyl borate and imide.

The present disclosure also provides a battery module and a battery pack comprising the secondary battery as a unit cell, and a device comprising the battery module or the battery pack.

Specific examples of the device may comprise small devices such as computers, mobile phones and power tools, and medium- and large-scale devices such as power tools powered by an electric motor; electric vehicles comprising Electric Vehicles (EVs), Hybrid Electric Vehicles (HEVs) and Plug-in Hybrid Electric Vehicles (PHEVs); electric wheelers comprising E-bikes and E-scooters; electric golf carts; and energy storage systems, but is not limited thereto.

The structure of the battery module, the battery pack and the device is well known in the art, and its detailed description is omitted herein.

MODE FOR DISCLOSURE

Hereinafter, examples are presented to help understanding the present disclosure. However, the following examples merely illustrate the present disclosure and it will be obvious to those skilled in the art that various changes and modifications can be made within the scope and technical idea of the present disclosure and such changes and modifications fall within the scope of the appended claims.

**<Preparation of porous carbon materials>**

**Comparative Example 1**

Carbon nanotube (MWCNT) that had not been centrifugally ground was used without control of particle size.

**Comparative Example 2**

The carbon nanotube (MWCNT) prepared in Comparative Example 1 was pulverized by jet milling.

**Examples 1-5 and Comparative Example 3**

Carbon nanotube (MWCNT) was introduced into a centrifugal grinder (ZM 200 of Retsch GmbH) equipped with a sieve for control of particle size. The mesh size of the sieve rpm and angular velocity were controlled under the conditions described in Table 1 to achieve the desired $D_{50}$ particle size (target $D_{50}$) of the carbon nanotube.

**Comparative Example 4**

Carbon nanotube (MWCNT) was filtered through a sieve for control of particle size. The mesh size of the sieve was controlled under the condition described in Table 1 to achieve the desired $D_{50}$ particle size (target $D_{50}$) of the carbon nanotube.

**Comparative Example 5**

A carbon nanotube was obtained in the same manner as in Example 1 except that the carbon nanotube (MWCNT) was introduced into a centrifugal grinder (CSM80 of Netzsch) not equipped with a sieve.

[Table 1]

|  | Ex. 1 | Ex. 2 | Ex. 3 | Ex. 4 | Ex. 5 | Comp. Ex. 3 | Comp. Ex 4 | Com. Ex.5 |
|---|---|---|---|---|---|---|---|---|
| Target $D_{50}$ | 20 μm | 27 μm | 35 μm | 65 μm | 22 μm | 72 μm | 35 μm |  |
| Mesh size | 80 μm | 80 μm | 120 μm | 200 μm | 80 μm | 500 μm | 75 μm | - |
| rpm | 18000 | 14000 | 10000 | 6000 | 10000 | 10000 | - | 6000 |

(continued)

|  | Ex. 1 | Ex. 2 | Ex. 3 | Ex. 4 | Ex. 5 | Comp. Ex. 3 | Comp. Ex 4 | Com. Ex.5 |
|---|---|---|---|---|---|---|---|---|
| Angular velocity (rad/s) | 94.2 | 73.3 | 54.3 | 31.4 | 54.3 | 54.3 | - | 94.2 |

**Test Example 1. Measurement of particle size of carbon nanotubes**

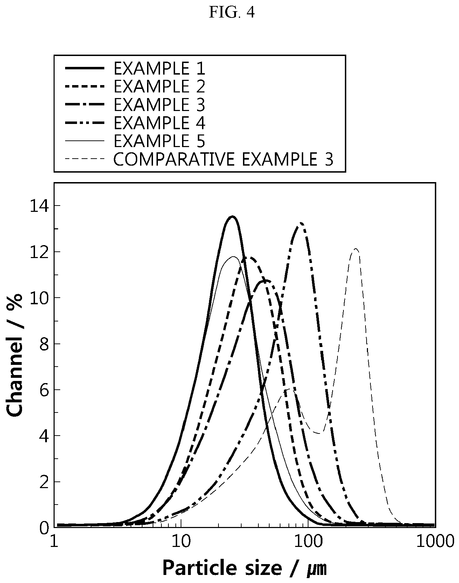

The particle size of the centrifugally ground carbon nanotubes of Examples 1-5 and Comparative Example 3, the carbon nanotube of Comparative Example 1, the j et-milled carbon nanotube of Comparative Example 2 and the sieve-filtered carbon nanotube of Comparative Example 4 was measured using a dry particle size analyzer (Microtrac). The result is shown in Table 2, Table 3 and FIG. 4.

Because the applied force varies depending on the size of the centrifugal grinder, the rpm value was decreased as the size of the centrifugal grinder was larger in order to apply comparable force (for maintaining the angular velocity).

[Table 2]

|  | Ex. 1 | Ex. 2 | Ex. 3 | Ex. 4 | Ex. 5 |
|---|---|---|---|---|---|
| Target $D_{50}$ | 20 $\mu$m | 27 $\mu$m | 35 $\mu$m | 65 $\mu$m | 22 $\mu$m |
| Mesh size | 80 $\mu$m | 80 $\mu$m | 120 $\mu$m | 200 $\mu$m | 80 $\mu$m |
| Mesh size/target $D_{50}$ | 4 | 2.97 | 3.43 | 3.1 | 3.67 |
| rpm | 18000 | 14000 | 10000 | 6000 | 10000 |
| $D_{10}$ | 9 $\mu$m | 12 $\mu$m | 14 $\mu$m | 22 $\mu$m | 9 $\mu$m |
| $D_{20}$ | 13 $\mu$m | 17 $\mu$m | 19 $\mu$m | 34 $\mu$m | 14 $\mu$m |
| $D_{40}$ | 18 $\mu$m | 25 $\mu$m | 29 $\mu$m | 56 $\mu$m | 19 $\mu$m |
| $D_{50}$ | 20 $\mu$m | 28 $\mu$m | 35 $\mu$m | 66 $\mu$m | 22 $\mu$m |
| $D_{60}$ | 23 $\mu$m | 34 $\mu$m | 41 $\mu$m | 75 $\mu$m | 25 $\mu$m |
| $D_{70}$ | 27 $\mu$m | 39 $\mu$m | 49 $\mu$m | 85 $\mu$m | 32 $\mu$m |
| $D_{80}$ | 32 $\mu$m | 46 $\mu$m | 58 $\mu$m | 98 $\mu$m | 38 $\mu$m |
| $D_{90}$ | 41 $\mu$m | 57 $\mu$m | 73 $\mu$m | 118 $\mu$m | 61 $\mu$m |
| $D_{95}$ | 53 $\mu$m | 68 $\mu$m | 88 $\mu$m | 138 $\mu$m | 75 $\mu$m |
| $D_{99}$ | 98 $\mu$m | 92 $\mu$m | 128 $\mu$m | 184 $\mu$m | 105 $\mu$m |
| $D_{90}/D_{10}$ | 4.56 | 4.75 | 5.21 | 5.36 | 3.78 |
| $D_{10}$ to $D_{50}$ standard deviation ($\mu$m) | 0.06 | 0.4 | 0.62 | 1.2 | 0.81 |

[Table 3]

|  | Comp. Ex. 1 | Comp. Ex. 2 | Comp. Ex. 3 | Comp. Ex. 4 | Comp. Ex. 5 |
|---|---|---|---|---|---|
| Target $D_{50}$ | - |  | 72 $\mu$m | 35 $\mu$m |  |
| Mesh size | - | - | 500 $\mu$m | 75 $\mu$m | - |
| Mesh size/target $D_{50}$ | - | - | 6.94 | 2.14 | - |
| rpm | - | - | 10000 | - | 6000 |
| $D_{10}$ | 25 $\mu$m | 11 $\mu$m | 23 $\mu$m | 12 $\mu$m | 7 $\mu$m |
| $D_{20}$ | 42 $\mu$m | 17 $\mu$m | 36 $\mu$m | 17 $\mu$m | 12 $\mu$m |

(continued)

|  | Comp. Ex. 1 | Comp. Ex. 2 | Comp. Ex. 3 | Comp. Ex. 4 | Comp. Ex. 5 |
|---|---|---|---|---|---|
| $D_{40}$ | 69 $\mu$m | 31 $\mu$m | 59 $\mu$m | 28 $\mu$m | 24 $\mu$m |
| $D_{50}$ | 93 $\mu$m | 41 $\mu$m | 72 $\mu$m | 35 $\mu$m | 29 $\mu$m |
| $D_{60}$ | 149 $\mu$m | 53 $\mu$m | 85 $\mu$m | 43 $\mu$m | 34 $\mu$m |
| $D_{70}$ | 184 $\mu$m | 69 $\mu$m | 101 $\mu$m | 53 $\mu$m | 40 $\mu$m |
| $D_{80}$ | 211 $\mu$m | 90 $\mu$m | 119 $\mu$m | 63 $\mu$m | 47 $\mu$m |
| $D_{90}$ | 241 $\mu$m | 116 $\mu$m | 143 $\mu$m | 78 $\mu$m | 61 $\mu$m |
| $D_{95}$ | 268 $\mu$m | 138 $\mu$m | 164 $\mu$m | 92 $\mu$m | 76 $\mu$m |
| D99 | 356 $\mu$m | 184 $\mu$m | 213 $\mu$m | 129 $\mu$m | 123 $\mu$m |
| $D_{90}/D_{10}$ | 9.64 | 10.37 | 9.3 | 6.5 | 17.57 |
| $D_{10}$ to $D_{50}$ standard deviation ($\mu$m) | 10 | 0.72 | 3.6 | 1.57 | > 10 |

As seen from Table 2 and Table 3, the carbon nanotubes showed a particle size the same as or similar to the desired $D_{50}$ particle size when the mesh size of the sieve was 2.8-4 times of the desired $D_{50}$ particle size of the carbon nanotubes. In addition, the $D_{90}$ particle size of the carbon nanotubes was larger than and 6 times or smaller as compared to the $D_{10}$ particle size, and the $D_{10}$ to $D_{50}$ standard deviation of the carbon nanotubes was 1.5 or smaller.

From these results, it can be seen that the desired $D_{50}$ particle size of the porous carbon material can be achieved by the method for controlling the particle size of a porous carbon material of the present disclosure and a very narrow particle size distribution can be achieved.

In contrast, for the carbon nanotube of Comparative Example 1, which had not been ground, the $D_{90}$ particle size was 9.64 times of the $D_{10}$ particle size. In addition, the $D_{10}$ to $D_{50}$ standard deviation of the carbon nanotube was very large as 10, indicating that the particle size of the carbon nanotube was not controlled appropriately and a carbon nanotube with a very nonuniform particle size was prepared.

For Comparative Example 2, wherein jet milling was performed instead of centrifugal grinding, the $D_{10}$ to $D_{50}$ standard deviation of the carbon nanotube was low as 0.72 but the $D_{90}$ particle size was 10.37 times of the $D_{10}$ particle size due to nonuniform pulverization. That is to say, although s relatively narrow $D_{10}$ to $D_{50}$ particle size distribution was achieved, the proportion of $D_{90}$ was much larger than that of $D_{10}$, suggesting that the overall particle size distribution was broad and the carbon nanotube was not pulverized uniformly.

In Comparative Example 3, the carbon nanotube was centrifugally ground and filtered through the sieve for control of particle size. The mesh size of the sieve was 6.94 times of the desired $D_{50}$ particle size of the carbon nanotube. Although the desired $D_{50}$ particle size could be achieved, the $D_{90}$ particle size of the carbon nanotube was 9.3 times of the $D_{10}$ particle size and the $D_{10}$ to $D_{50}$ standard deviation of the carbon nanotube was 3.6. That is to say, the carbon nanotube of Comparative Example 3 had a nonuniform particle size with a broad particle size distribution. Through this, it can be seen that the desired $D_{50}$ particle size of the carbon nanotube can be achieved and the particle size can be controlled with a very narrow particle size distribution when the mesh size of the sieve is 2.8-4 times of the desired $D_{50}$ particle size of the carbon nanotube.

In Comparative Example 4, the carbon nanotube was filtered through the sieve only without centrifugal grinding. In general, the $D_{50}$ particle size of the carbon nanotube filtered through the sieve only is about 1/2 of the mesh size of the sieve. For Comparative Example 4, the desired $D_{50}$ particle size of the carbon nanotube could be achieved because the mesh size of the sieve was 2.14 times of desired $D_{50}$ particle size of the carbon nanotube. However, because the centrifugal grinding was not performed, the $D_{90}$ particle size was 6.5 times of the $D_{10}$ particle size and the $D_{10}$ to $D_{50}$ standard deviation was 1.57, indicating that the carbon nanotube Comparative Example 4 has a nonuniform particle size with a broad particle size distribution. In addition, the yield was low.

For Comparative Example 5, wherein centrifugal grinding was performed only without filtering through the sieve, the carbon material showed a large $D_{10}$ to $D_{50}$ standard deviation and large deviation in particle size.

Accordingly, it can be seen that a porous carbon material with a narrow particle size distribution can be obtained by centrifugally grinding a porous carbon material and filtering the same through a sieve at the same time and setting the mesh size of the sieve to 2.8-4 times of the desired $D_{50}$ particle size of the porous carbon material.

**Test Example 2: Measurement of tap density before and after applying the inventive method**

Preparation of porous carbon material according to the invention

Agglomerates of multi-walled carbon nanotubes (Cnano, MWCNT, tap density 0.14 g/cm$^3$, particle shape uniformity 1.52) were prepared. Subsequently, the agglomerates were ground at 18,000 rpm using a grinder (Retsch, ZM-200), and allowed to pass through a mesh having the opening size of 80 $\mu$m to prepare a shape modified porous carbon material.

When the modified porous carbon material was tapped 1000 times, the measured tap density was 0.07 g/cm$^3$, and the measured particle shape uniformity was 1.07. At this time, the tap density was measured using TAP-2S (LOGAN) according to ASTM B527-06 and the particle shape uniformity represents the ratio of the diameter of the circumscribed circle to the diameter of the inscribed circle of the particle, and was calculated as the average value of the ratio of the diameter of the circumscribed circle / the diameter of the inscribed circle of five randomly selected particles.

It is obvious to those having ordinary skill in the technical field pertaining to the present disclosure that a variety of variations and modifications may be made within the scope of the present disclosure based on the foregoing description.

**Test Example 3. Comparative evaluation of surface properties according to particle size control methods**

SEM images of each of the porous carbon material prepared in Comparative Example 2 and the porous carbon material prepared in Example 1 are shown in FIG. 6 .

The SEM image on the left shows the porous carbon material of Comparative Example 2, and the SEM image on the right shows the porous carbon material of Example 1.

Referring to FIG. 6 , it was confirmed that the surface of the porous carbon material pulverized by the jet mill was relatively flat, whereas the surface of the porous carbon material pulverized by the centrifugal mill was relatively rough.

From this, it was inferred that the porous carbon material having a controlled particle diameter according to an aspect of the present invention has low tap density and excellent particle shape uniformity characteristics due to surface characteristics.

**Claims**

1. A method for preparing a porous carbon material with a controlled particle size, comprising:

   (1) a step of grinding a porous carbon material using a centrifugal grinder; and
   (2) a step of filtering the ground porous carbon material obtained in step (1) through a sieve to obtain the porous carbon material with a controlled particle size,

   wherein the mesh size of the sieve is 2.8-4 times of the target $D_{50}$ particle size determined by laser diffraction analysis of the porous carbon material with a controlled particle size.

2. The method according to claim 1, wherein the porous carbon material comprises one or more selected from a group consisting of carbon nanotube, carbon black, carbon nanofiber, graphite and activated carbon.

3. The method according to claim 1 or 2, the grinding of the porous carbon material in step (1) is performed using the centrifugal grinder operated with an angular velocity from 30 to 125 rad/s.

4. The method according to any of the preceding claims, wherein the centrifugal grinder has a plurality of teeth, and particularly 2 to 20 teeth.

5. The method according to claim 4, wherein each of the plurality of teeth has a shape of a triangular prism, particularly an equilateral triangular prism, and is arranged so as to point inwardly.

6. The method according to claim 4 or claim 5, wherein the teeth are arranged so that, in a top view along a rotation axis of the centrifugal grinder, perpendicular bisectors of the triangular prisms meet in a center of the centrifugal grinder.

7. The method according to any of the claims 4 to 6, wherein the sieve has an annular cylindrical shape, wherein the sieve is arranged such as to surround the plurality of teeth.

8. The method according to claim 7, wherein, in the top view, a smallest distance between one of the plurality of teeth and the sieve in a radial direction of the centrifugal grinder is from 0.5 to 2 mm.

9. The method according to any of the preceding claims, wherein the porous carbon material with a controlled particle size has a ratio of the $D_{90}$ particle size to the $D_{10}$ particle size (broadness factor, BF) of 7 or less.

10. The method according to any of the preceding claims, wherein the $D_{10}$ to $D_{50}$ particle size standard deviation of the porous carbon material with a controlled particle size is 1.5 $\mu$m or less.

11. The method according to any of the preceding claims, wherein the $D_{50}$ particle size of the porous carbon material with a controlled particle size is 100 $\mu$m or less.

12. The method according to any of the preceding claims, wherein the tap density of the porous carbon material before performing step (1) is the same as or higher than the tap density of the porous carbon material with a controlled particle size after filtering through the sieve in the step (2).

13. The method according to any of the preceding claims, wherein the steps (1) and (2) are performed at the same time.

14. A sulfur-carbon composite comprising:

   a porous carbon material prepared according to the method according to any of the claims 1 to 13; and
   a sulfur-based material at least partially supported on the surface of the porous carbon material .

15. A lithium-sulfur battery comprising:

   a positive electrode comprising the sulfur-carbon composite according to claim 14;
   a negative electrode;
   a separator disposed between the positive electrode and the negative electrode; and
   an electrolyte.

FIG. 1

FIG. 2

POROUS
CARBON MATERIAL

BALL-MILLED
POROUS
CARBON MATERIAL

FIG. 3

SIEVE

ROTATING TOOTH

FIG. 4

FIG. 5

FIG. 6

Europäisches
Patentamt

European
Patent Office

Office européen
des brevets

# EUROPEAN SEARCH REPORT

Application Number

EP 23 19 6121

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 667 779 A2 (LG CHEMICAL LTD [KR]) 17 June 2020 (2020-06-17) | 14,15 | INV. H01M4/36 |
| A | * paragraphs [0039] – [0097]; claims 1–15 * | 1–13 | H01M4/38 H01M4/587 H01M4/62 |
| X | US 2022/293952 A1 (BROWN DAVID [FI]) 15 September 2022 (2022-09-15) | 1 | H01M10/0525 H01M4/02 |
| Y | * paragraphs [0001], [00650] – [0074], | 2–13 | H01M4/133 |
| A | [0113], [0114], [0116], [0144] – [0148]; claims 1–26 * | 14,15 | H01M4/136 H01M4/1397 H01M4/58 |
| Y | Retsch: "Retsch General Catalogue", , 1 February 2020 (2020-02-01), pages 1–132, XP093153963, Haan Germany Retrieved from the Internet: URL:https://www.retsch.com/files/14586/general-catalogue.pdf [retrieved on 2024-04-19] | 2–13 | H01M4/583 |
| A | * pages 20–23 * | 1,14,15 | TECHNICAL FIELDS SEARCHED (IPC) |
| Y | JP 2017 108022 A (CATALER CORP) 15 June 2017 (2017-06-15) | 2–13 | H01M |
| A | * paragraphs [0001] – [0013], [0026] – [0058]; claims 1–10; figures 1,2 * | 1,14,15 | |

The present search report has been drawn up for all claims

| Place of search | Date of completion of the search | Examiner |
|---|---|---|
| The Hague | 23 April 2024 | Konstantopoulos, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 6121

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2024

| Patent document cited in search report | | | Publication date | Patent family member(s) | | | Publication date |
|---|---|---|---|---|---|---|---|
| EP 3667779 | A2 | | 17-06-2020 | CN | 111066181 | A | 24-04-2020 |
| | | | | EP | 3667779 | A2 | 17-06-2020 |
| | | | | JP | 7062166 | B2 | 06-05-2022 |
| | | | | JP | 2020536360 | A | 10-12-2020 |
| | | | | KR | 20190060262 | A | 03-06-2019 |
| | | | | US | 2020220169 | A1 | 09-07-2020 |
| | | | | WO | 2019103326 | A2 | 31-05-2019 |
| US 2022293952 | A1 | | 15-09-2022 | AU | 2020328890 | A1 | 24-03-2022 |
| | | | | BR | 112022002616 | A2 | 03-05-2022 |
| | | | | CA | 3150814 | A1 | 18-02-2021 |
| | | | | CN | 114616696 | A | 10-06-2022 |
| | | | | EP | 4014264 | A1 | 22-06-2022 |
| | | | | FI | 20195677 | A1 | 14-02-2021 |
| | | | | IL | 290542 | A | 01-04-2022 |
| | | | | JP | 2022544392 | A | 18-10-2022 |
| | | | | KR | 20220049015 | A | 20-04-2022 |
| | | | | PE | 20220633 | A1 | 27-04-2022 |
| | | | | TW | 202121460 | A | 01-06-2021 |
| | | | | US | 2022293952 | A1 | 15-09-2022 |
| | | | | WO | 2021028619 | A1 | 18-02-2021 |
| JP 2017108022 | A | | 15-06-2017 | NONE | | | |

EPO FORM P0459

For more details about this annex : see Official Journal of the European Patent Office, No. 12/82